# DEMANDE DE BREVET EUROPEEN

(11) **EP 1 156 407 A1**
(43) Date de publication de la demande: **21.11.2001**
(21) Numéro de dépôt: 01401226.4
(22) Date de dépôt: 14.05.2001
(51) Int. Cl.: G06F 3/023, G06F 9/44

(54) **Procédé de gestion d'une interface homme-machine graphique**

(30) Priorité: 18.05.2000 FR 0006356
(71) Demandeur: ALCATEL, 75008 Paris (FR)
(72) Inventeur: Chafer, Sylvain, 75012 Paris (FR); Marzouki, Omar, 75012 Paris (FR); Mlynarczyk, Jérôme, 92200 Neuilly / Seine (FR); Hauw, Linda Hélène, 75015 Paris (FR)
(74) Mandataire: Sciaux, Edmond

(57) **Abrégé**

Procédé de gestion d'événements claviers pour naviguer à travers une interface homme-machine graphique configurée sous la forme d'un arbre d'éléments graphiques (EGᵢ), caractérisé en ce qu'à chaque élément graphique (EGᵢ) de l'arbre est associée une liste (LEGᵢ) de touches (TGⱼ) et en ce qu'à chaque touche (TGⱼ) desdites listes est associée une action (Aⱼ) à déclencher lors de la réception d'un événement clavier correspondant à ladite touche et audit élément graphique.

## Description

L'invention concerne un procédé de gestion d'événements clavier d'une interface homme-machine graphique configurée sous la forme d'un arbre d'éléments graphiques.

L'invention concerne également un dispositif comportant une telle interface.

Le domaine de l'invention est celui de la navigation à travers l'interface graphique d'un dispositif disposant d'un clavier mais ne disposant pas d'outil de pointage ou de souris tels que les téléphones ou les organiseurs portables.

Les applications graphiques fonctionnant sur ce type de dispositif peuvent être développées selon divers modes de programmation et en particulier selon une programmation objet telle que Java.

On rappelle qu'en programmation objet des classes sont définies, chaque classe ayant ses propres caractéristiques. Ces classes sont reliées entre elles par des relations père-fils, la classe fils héritant des caractéristiques de la classe de son père.

La plupart des applications graphiques développées dans l'environnement Java définissent des classes représentant des composants ou éléments graphiques que l'on peut imbriquer. On peut citer comme exemples de composants graphiques : les fenêtres, les champs de saisie, les boutons « OK », les étiquettes, etc. Le programmeur peut aussi définir lui-même de nouveaux composants.

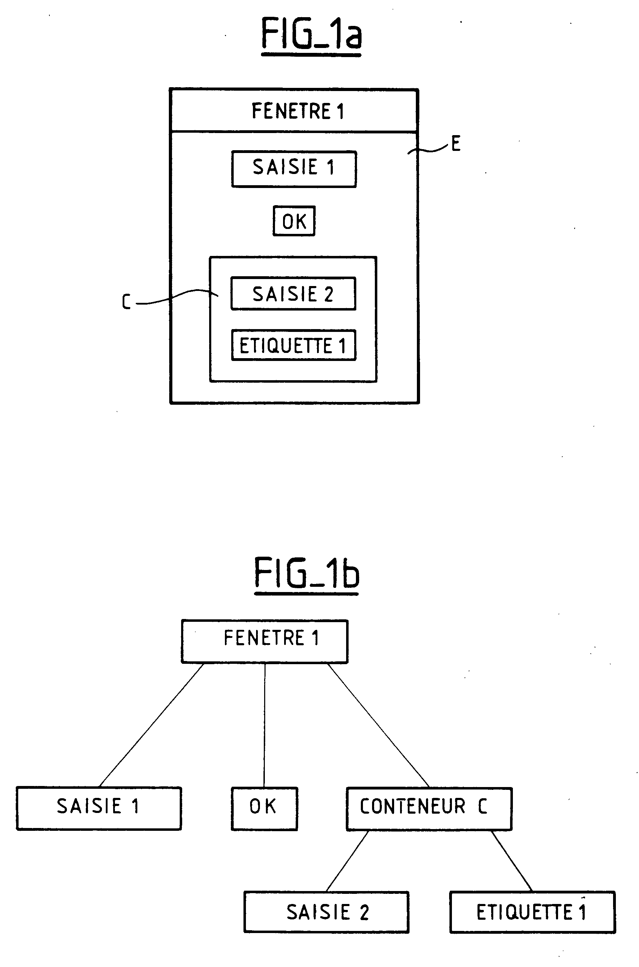

Un exemple d'écran E ainsi composé est illustré figure 1 a). Cet écran E comprend des composants graphiques simples tels que les champs de saisie, les étiquettes et les boutons. Il comprend de plus un composant complexe ou conteneur C c'est-à-dire dans lequel sont imbriqués des composants. Un composant graphique du type fenêtre, « fenêtre 1 » a a d'abord été choisi. Trois composants sont imbriqués dans cette « fenêtre 1 » : un champ de saisie, « saisie 1 », un bouton « OK » et un conteneur C dans lequel sont imbriqués un champ de saisie « saisie 2 » et une étiquette « étiquette 1 ».

À cette composition correspond une arborescence de composants graphiques représentée figure 1 b). Le composant graphique père, "Fenêtre 1" a trois composants graphiques fils : "Saisie 1", "OK" et "Conteneur C" qui a lui-même deux composants fils, "Saisie 2" et "Etiquette 1".

Il est utile pour l'utilisateur d'un tel dispositif de pouvoir disposer de touches de raccourcis globales. Une touche de raccourci globale consiste en une ou plusieurs touches du clavier qui, pressées simultanément (la touche de raccourci globale "Ctrl Z" par exemple est constituée de la touche "Ctrl" et de la touche "Z" pressées simultanément) permettent de déclencher une action spécifique quel que soit le composant graphique sur lequel il se trouve. Ainsi dans notre exemple, l'utilisateur peut souhaiter disposer d'une touche globale déclenchant l'action « retour à l'écran précédent » alors que le composant actif c'est-à-dire en attente d'un événement clavier est le composant « Saisie 2 ». L'utilisateur souhaitera aussi disposer de la même touche globale déclenchant la même action alors que le composant actif sera cette fois « OK ».

Mais les procédés de navigation des applications graphiques développées sous Java ne permettent pas d'utiliser de touches globales.

Le but de l'invention est de contourner cette limitation des applications fonctionnant sur des dispositifs ne disposant pas de souris, en permettant aux développeurs de telles applications de définir des touches de raccourci globales.

L'invention a pour objet un procédé de gestion d'événements claviers pour naviguer à travers une interface homme-machine graphique configurée sous la forme d'un arbre d'éléments graphiques EGᵢ, principalement caractérisé en ce qu'à chaque élément graphique EGᵢ de l'arbre est associée une liste LEGᵢ de touches TGⱼ et en ce qu'à chaque touche TGⱼ desdites listes est associée une action Aⱼ à déclencher lors de la réception d'un événement clavier correspondant à ladite touche et audit élément graphique.

Un élément graphique EGᵢ étant actif et un événement clavier étant détecté par l'interface, le procédé comporte alors les étapes suivantes :
- comparaison dudit événement clavier aux touches TGⱼ desdites listes LEGᵢ en commençant par la liste de l'élément actif EGᵢ et en remontant dans ledit arbre,
- déclenchement de l'action associée à la première touche correspondant audit événement clavier.

L'invention concerne également un dispositif portable DP comprenant une interface graphique comportant un clavier CL, un écran E et une unité de gestion GI de l'interface, caractérisé en ce que l'unité de gestion GI inclut un procédé de gestion des événements clavier tel que décrit précédemment.

Ce dispositif DP peut être un téléphone portable ou un organiseur portable.

D'autres particularités et avantages de l'invention apparaîtront clairement à la lecture de la description faite à titre d'exemple non limitatif et en regard des dessins annexés sur lesquels :
- la figure 1a) illustre un exemple d'écran composé d'éléments graphiques conformément à l'état de la technique,
- la figure 1b) représente la structure en arbre associée à l'exemple précédent,
- la figure 2 a) représente un arbre d'éléments graphiques selon l'invention,
- la figure 2b) détaille un élément graphique auquel est associée conformément à l'invention une liste de couples de touches globales - actions correspondantes,
- le figure 3 est un organigramme du mode de fonctionnement de l'invention,
- la figure 4 représente un dispositif portable intégrant un procédé de gestion d'événements clavier selon l'invention.

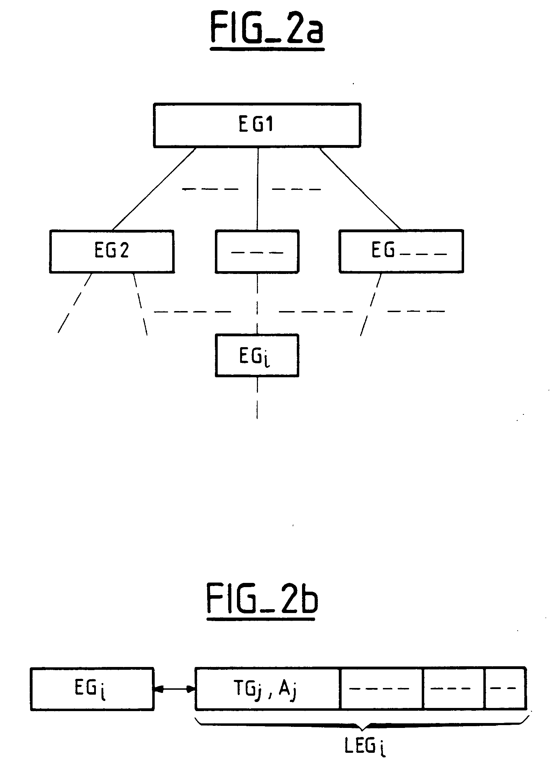

Dans un arbre d'éléments graphiques selon l'invention représenté figure 2a), chaque élément graphique EGᵢ, i variant de 1 à N le nombre d'éléments graphiques utilisés pour composer un écran, est associé à une liste LEGᵢ de couples représentée figure 2b). Un couple est constitué d'une touche globale TGⱼ à laquelle est associée une action Aⱼ à exécuter, j variant de 1 à M le nombre de couples définis dans l'arbre.

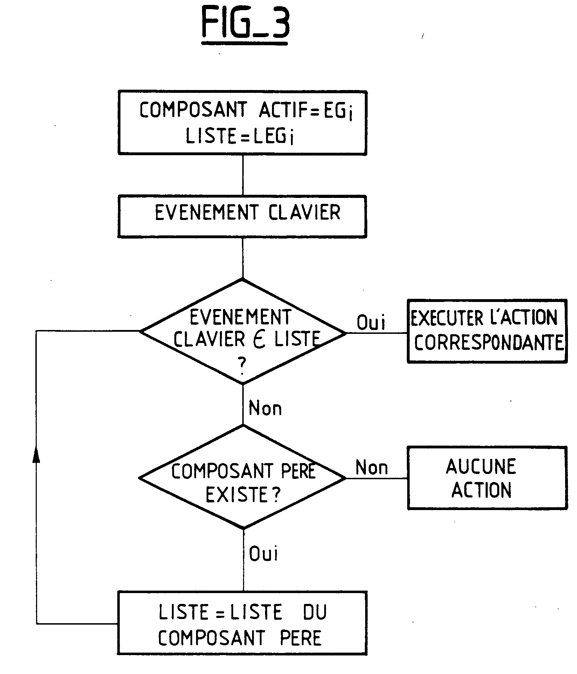

En mode de fonctionnement illustré par la figure 3, c'est-à-dire lorsqu'un événement clavier intervient alors que le composant EGᵢ est actif, cet événement clavier est comparé à chaque touche globale TGⱼ de la liste LEGᵢ de ce composant actif EGᵢ. Si l'événement n'est pas dans cette liste, la comparaison est réitérée mais cette fois avec la liste du composant précédent le composant actif dans l'arbre, c'est-à-dire du composant père. On remonte ainsi dans l'arbre jusqu'à trouver la touche globale TGⱼ correspondant à l'événement clavier. L'action associée à la touche globale TGᵢ est alors déclenchée.

Ainsi grâce à ce cheminement à travers l'arbre, il n'est pas indispensable de définir un couple (TGⱼ, Aⱼ) dans la liste d'un composant pour que ce couple soit associé à ce composant : il suffit qu'il soit défini dans la liste d'un des composants "parents". Ainsi une liste LEGᵢ peut être vide. Si à la fin du parcours du chemin dans l'arbre, aucune touche globale ne correspond à l'événement clavier, alors aucune action ne sera déclenchée ; un signal d'erreur sera éventuellement envoyé à l'utilisateur.

Cette définition globale des couples (TGⱼ, Aⱼ) présente plusieurs avantages. Lorsque par la suite on souhaitera introduire dans l'arbre de nouveaux composants EGᵢ, voire de nouveaux conteneurs, ceux-ci hériteront automatiquement des couples (TGⱼ, Aⱼ) de leurs parents sans qu'il soit nécessaire de les associer dans leur liste LEGᵢ. Et les listes s'en trouvent d'autant plus allégées.

Ce mode de fonctionnement basé sur ce cheminement à travers l'arbre offre une grande flexibilité. On peut en effet souhaiter au niveau d'un composant que l'on désignera par EGᵢ, changer un couple de la liste LEGₗ par exemple l'action Aₖ associée à une touche globale existante TGₖ. Il suffit de définir dans cette liste LEGₗ un nouveau couple associant à la touche globale TGₖ, une nouvelle action A_{k'}.

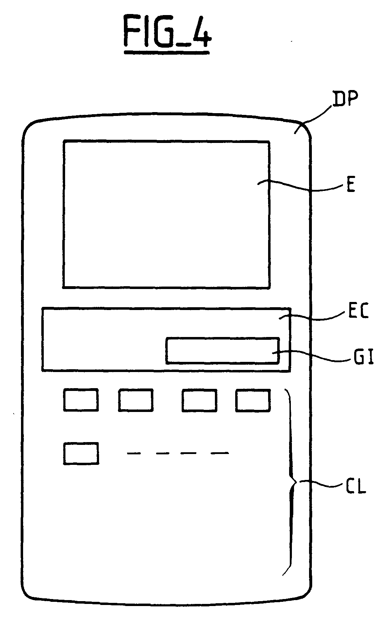

Comme représenté figure 4, un dispositif DP disposant d'une telle interface graphique comporte classiquement un clavier CL, un écran E et une unité de gestion GI de l'interface homme-machine incluse dans une électronique de commande EC. Le développeur chargé de la gestion de l'interface intégrera la solution proposée dans l'unité de gestion GI.

## Revendications

1. Procédé de gestion d'événements clavier pour naviguer à travers une interface homme-machine graphique configurée sous la forme d'un arbre d'éléments graphiques (EGᵢ), **caractérisé en ce qu'**à chaque élément graphique (EGᵢ) de l'arbre est associée une liste (LEGᵢ) de touches (TGⱼ), et **en ce qu'**à chaque touche (TGⱼ) desdites listes est associée une action (Aⱼ) à déclencher lors de la réception d'un événement clavier correspondant à ladite touche et audit élément graphique.

2. Procédé selon la revendication 1, un élément graphique (EGᵢ) étant actif et un événement clavier étant détecté par l'interface, **caractérisé en ce qu'**il comporte les étapes suivantes :
- comparaison dudit événement clavier aux touches (TGⱼ) desdites listes (LEGᵢ) en commençant par la liste de l'élément actif (EGᵢ) et en remontant dans ledit arbre,
- déclenchement de l'action associée à la première touche correspondant audit événement clavier.

3. Dispositif portable (DP) comprenant une interface graphique comportant un clavier (CL), un écran (E) et une unité de gestion (GI) de l'interface, **caractérisé en ce que** l'unité de gestion (GI) inclut un procédé de gestion des événements clavier selon l'une des revendications précédentes.

4. Dispositif (DP) selon la revendication précédente, **caractérisé en ce que** le dispositif (DP) est un téléphone portable.

5. Dispositif (DP) selon la revendication 4, **caractérisé en ce que** le dispositif (DP) est un organiseur portable.
